# EUROPÄISCHE PATENTSCHRIFT

(11) **EP 1 926 965 B1**
(45) Veröffentlichungstag und Bekanntmachung des Hinweises auf die Patenterteilung: **09.03.2016**
(21) Anmeldenummer: 06793183.2
(22) Anmeldetag: 04.09.2006
(51) Int. Cl.: G01B 5/30, G01B 7/16, G01L 1/22

(54) **DEHNUNGSAUFNEHMER ZUM ELEKTRISCHEN MESSEN NEGATIVER UND POSITIVER OBERFLÄCHENDEHNUNGEN**
EXTENSION SENSOR FOR ELECTRICALLY MEASURING NEGATIVE AND POSITIVE SURFACE EXTENSIONS
CAPTEUR DE DILATATION POUR REALISER UNE MESURE PAR VOIE ELECTRIQUE DE DILATATIONS NEGATIVES ET POSITIVES DE SURFACES

(30) Priorität: 22.09.2005 CH 15472005
(43) Veröffentlichungstag der Anmeldung: 04.06.2008
(73) Patentinhaber: Sensormate AG, 8355 Aadorf (CH)
(72) Erfinder: SCHLAEPFER, Bruno, CH-8523 Hagenbuch (CH)
(74) Vertreter: Hepp Wenger Ryffel AG
(86) Internationale Anmeldenummer: PCT/EP2006/065964
(87) Internationale Veröffentlichungsnummer: WO 2007/033900

(56) Entgegenhaltungen:
- WO-A-01/84073
- CH-A5- 687 647
- CH-A5- 687 648
- DE-A1- 19 954 300
- DE-B- 1 153 192
- JP-A- 2005 114 403
- US-A- 2 900 613
- US-A- 5 535 631

## Beschreibung

Die Erfindung betrifft einen Dehnungsaufnehmer zum elektrischen Messen negativer und positiver Oberflächendehnungen gemäss dem Oberbegriff von Anspruch 1.

Derartige Dehnungsaufnehmer können für verschiedenartige Messzwecke eingesetzt werden. So ist beispielsweise an industriellen Pressen und an Maschinen die Messung der Dehnung an der Struktur von grosser Bedeutung. Speziell an Kunststoff-Spritzgiess- und an Druckgussmaschinen muss die Dehnungsverteilung auf die vier Säulen gemessen werden. Zu diesem Zweck werden Dehnungsaufnehmer an den Säulen angebracht.

Gattungsmässig vergleichbare Dehnungsaufnehmer sind beispielsweise in der CH 687 647 oder in der EP 1 278 999 beschrieben. Je nach Ausgestaltung des Dehnungsaufnehmers und nach der Konfiguration des zu messenden Werkstücks wird die Anpresskraft durch Schrauben aufgebracht, welche entweder direkt in das Werkstück geschraubt werden oder welche über eine Spänneinrichtung eine Anpresskraft ausüben. Ein Nachteil dieser Dehnungsaufnehmer besteht darin, dass die Befestigung mit einem grossen Aufwand an Material und Arbeit verbunden ist. Ausserdem ist es nicht bei jedem Werkstück ohne weiteres möglich, Gewindelöcher für das Einschrauben von Spannschrauben anzubringen. Ein Nachteil von Spannvorrichtungen besteht ausserdem darin, dass diese immer mehr oder weniger an die Grösse des Werkstücks anzupassen sind, was wiederum mit hohen Kosten verbunden ist.

Andere Dehnungsaufnehmer, welche beispielsweise in US 5 535 631 oder in DE 199 54 300 beschrieben sind, weisen ein Aufnehmergehäuse mit einem dehnungsempflindlichen Element auf, das auf die zu messende Oberfläche geklebt wird. Zur Lagefixierung bis zur Aushärtung des Klebstoffes kann am Gehäuse ein Magnet angeordnet sein.

CH 687 648 zeigt einen Dehnungsaufnehmer für die Messung von Oberflächendehnungen an einer zylinderförmigen Oberfläche. Der Dehnungsaufnehmer ist dabei an die Zylinderform der Oberfläche angepasst und wird durch ein Gegenstück mittels Schraubverbindungen an die Zylinderoberfläche gepresst.

Die JP 2005 11 44 03 beschreibt ein Dehnungsmessinstrument mit einem Halteelement für die Aufnahme eines Anpressteils, an dessen Anpressfläche ein Dehnungsmessstreifen angeordnet ist. Das Anpressteil ist im Halteelement gegen die Vorspannkraft einer Feder im rechten Winkel zur Anpressfläche verschiebbar. Das Halteelement wird mit Hilfe eines Magneten auf dem Messobjekt fixiert. Damit soll eine Klebung des Dehnungsmessstreifens auf dem Messobjekt vermieden werden.

Es ist daher eine Aufgabe der Erfindung, einen Dehnungsaufnehmer der eingangs genannten Art zu schaffen, der kostengünstig herstellbar ist und der mit geringem Arbeitsaufwand an unterschiedlichen Werkstücken befestigt und auch wieder von diesen abgelöst werden kann. Diese Aufgabe wird erfindungsgemäss mit einem Dehnungsaufnehmer gelöst, der die Merkmale im Anspruch 1 aufweist.

Ein erfindungsgemässer Dehnungsaufnehmer ist im unabhängigen Anspruch 1 definiert.

Die als magnetische Mittel ausgebildeten Anpressmittel erlauben eine rasche Montage und Demontage des Dehnungsaufnehmers. Bei entsprechender Magnetkraft können sehr hohe Anpresskräfte aufgebracht werden, welche eine kraftschlüssige Verbindung zwischen der zu messenden Oberfläche und dem dehnungsempfindlichen Element gewährleisten.

Die erfindungsgemässen Dehnungsaufnehmer weisen dabei unter anderem ein Aufnehmergehäuse auf mit eingelassenen, aber gegenüber einer Auflagefläche doch noch etwas vorstehenden elastischen Elementen. Auf den durch die magnetischen Mittel stark angepressten elastischen Elementen sind dehnungsempfindliche Elemente angebracht, welche auf diese Weise fest und dank dem definierten gleichen Vorsprung zu der Auflagefläche immer gleich auf die zu messende Oberfläche gepresst werden, so dass Reibschluss entsteht und alle Dehnungen auf der Oberfläche ohne aufwändige Klebung in alle Richtungen auf die dehnungsempfindlichen Elemente übertragen und damit erfasst werden können. Dank einem robusten Gehäuse kann auch in einem industriellen Umfeld problemlos gemessen werden. Keiner der bisher bekannten Dehnungsaufnehmer kann all diese vorteilhaften Eigenschaften in sich vereinen.

Die magnetischen Mittel weisen zwei Magnete auf, welche das Aufnehmergehäuse auf die zu messende metallische und magnetische Struktur pressen. Das dehnungsempfindliche Element ist zwischen den beiden Magneten angeordnet, um damit eine gleichmässige Anpresskraft zu gewährleisten.
Die magnetischen Mittel sind permanent magnetisch. Es sind heute handelsübliche Permanentmagnete erhältlich, welche bei kleiner Abmessung sehr hohe Magnetkräfte aufbringen.
Die Anpresskraft der magnetischen Mittel wird vorteilhaft über Druckfedern bzw. über wenigstens eine Druckfeder auf das Aufnehmergehäuse aufgetragen. Je nach der gewählten Federcharakteristik kann dabei die Anpresskraft verändert werden. Besonders vorteilhaft ist die Vorspannkraft der Druckfedern mittels Verstellschrauben einstellbar.

Weitere Vorteile können erzielt werden, wenn die magnetischen Mittel in einer Führung im Aufnehmergehäuse geführt sind. Damit kann gewährleistet werden, dass die Anpresskraft ohne Querkräfte möglichst rechtwinklig zur Oberfläche des Werkstücks aufgebracht wird.

Das Aufnehmergehäuse muss nicht zwingend getrennt von den magnetischen Mitteln ausgebildet sein. In bestimmten Anwendungsfällen ist es denkbar, dass die magnetischen Mittel Teil des Aufnehmergehäuses sind bzw. dass die magnetischen Mittel lediglich einen Abschnitt des Aufnehmergehäuses bilden, der permanent magnetisch ausgebildet ist. Die magnetischen Mittel können aber auch fest mit dem Aufnehmergehäuse verbunden sein.

Die magnetischen Mittel und/oder das Aufnehmergehäuse können im Bereich der Auflagefläche zur Anlage gegen eine zylindrische oder sphärische Messoberfläche ausgebildet sein.

Vorzugsweise ist das dehnungsempfindliche Element mit einer dünnen Folie geschützt. Das dehnungsempfindliche Element ist vorteilhaft wenigstens ein Dehnungsmessstreifen, der in beliebigem Winkel auf dem elastischen Element angeordnet sein kann. Das dehnungsempfindliche Element kann auch eine piezokeramische Scheibe oder eine flache Piezofolie sein. Es ist auch ohne weiteres denkbar, dass der Dehnungsaufnehmer vier Dehnungsmessstreifen aufweist, die als Vollbrücken verschaltet sind.

Vorteilhaft ist eine Verstärkerelektronik unmittelbar im Aufnehmergehäuse angeordnet, wobei die Signalkabel durch Bohrungen im Aufnehmergehäuse vom dehnungsempfindlichen Element zur Verstärkerelektronik geführt sind.

Je nach Ausgestaltung und Stärke der magnetischen Mittel ist ein manuelles Ablösen ohne besondere Massnahmen nur schwierig oder gar nicht möglich. Es ist daher zweckmässig, wenn der Dehnungsaufnehmer mit Hilfsmitteln zum Abheben von einer Messoberfläche versehen ist, wobei diese Hilfsmittel fest oder lösbar am Aufnehmergehäuse angeordnet sein können. Vorteilhaft handelt es sich bei diesen Hilfsmitteln um einen Hebel, dessen Hebelarm das Aufbringen eines bestimmten Kippmoments ermöglicht.

Für das Messen länglicher, insbesondere zylindrischer oder prismatischer Werkstücke kann es besonders vorteilhaft sein, wenn das Aufnehmergehäuse zum wenigstens teilweisen Umfassen eines Werkstücks als schliessbares Umfassungsmittel, insbesondere als geteilter Flansch ausgebildet ist und wenn die Schliesskraft des Umfassungsmittels durch die Magnete, auf ein benachbartes Ende des Umfassungsmittels aufbringbar ist. Das Aufnehmergehäuse wird dabei wie eine Manschette um das Werkstück gelegt und die Magnete wirkten nicht unmittelbar auf das Werkstück, sondern dienen lediglich dazu, das Umfassungsmittel anstelle von Spannschrauben oder dergleichen in der geschlossenen Position zu halten. Bei einer derartigen Ausgestaltung des Dehnungsaufnehmers braucht das Werkstück nicht zwingend aus magnetischem Material zu sein.

Ersichtlicherweise haften die magnetischen Mittel nur auf magnetischem Material bzw. auf einem entsprechend gepolten Gegenmagneten. Zum Messen negativer und positiver Oberflächendehnungen auf einer unmagnetischen Oberfläche eines flächigen Werkstücks wird ein Verfahren angewendet, bei dem auf der der zu messenden Oberfläche gegenüberliegenden Oberfläche des flächigen Werkstücks im Wirkbereich der magnetischen Mittel ein Gegenmagnet und/oder ein magnetisches Stahlstück platziert wird. Bei ausreichender Magnetkraft genügt dies ohne weiteres, um das Aufnehmergehäuse zum kraftschlüssigen Anpressen des dehnungsempfindlichen Elements gegen die unmagnetische Oberfläche zu pressen.

Weitere Vorteile und Ausgestaltungen der Erfindung ergeben sich aus den nachstehend beschriebenen Ausführungsbeispielen und aus einigen der Zeichnungen. Es zeigen:
- Figur 1: Ein Schnitt durch einen erfindungsgemässen Dehnungsaufnehmer in teilmontiertem Zustand,
- Figur 2: der Dehnungsaufnehmer gemäss Figur 1 auf einer zu messenden Oberfläche,
- Figur 3: ein Schnitt durch eine nicht erfindungsgemässe Alternative mit nur einem Magnet,
- Figur 4: ein Schnitt durch eine weitere nicht erfindungsgemässe Alternative mit einem federbelasteten elastischen Element,
- Figur 5: ein Schnitt durch eine weitere nicht erfindungsgemässe Alternative mit einem durch Gewindebolzen belastbaren elastischen Element,
- Figur 6: ein Schnitt durch eine weitere nicht erfindungsgemässe Alternative mit einem Magnet und mit eingebauter Verstärkerelektronik,
- Figur 7: ein Schnitt durch eine weitere Ausführungsform mit einem flachen Aufnehmergehäuse,
- Figur 8: ein Schnitt durch eine nicht erfindungsgemässe Messanördnung mit nichtmagnetischer Messoberfläche,
- Figur 9: ein Schnitt durch eine nicht erfindungsgemässe Messanordnung für zylindrische Werkstücke,
- Figur 10: ein Schnitt durch eine nicht erfindungsgemässe alternative Messanordnung für zylindrische Werkstücke, und
- Figur 11: ein Teilschnitt durch eine weitere Messanordnung mit einem das Werkstück umfassenden Aufnehmergehäuse.

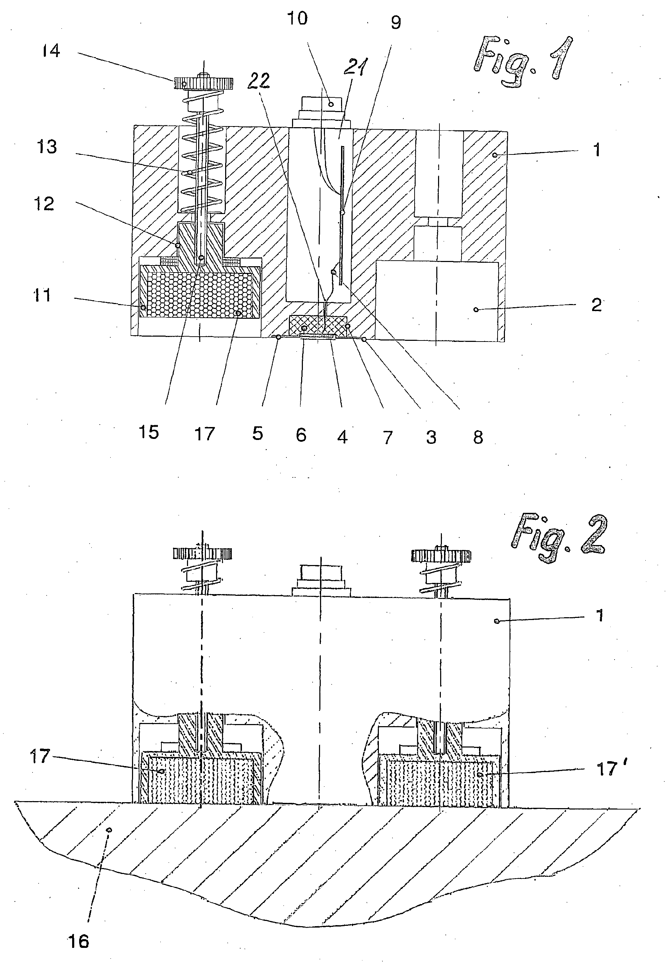

Beim Ausführungsbeispiel gemäss den Figuren 1 und 2 ist der Dehnungsaufnehmer mit zwei Magneten 17, 17' versehen. Diese sind in einem Aufnehmergehäuse 1 angeordnet, das beispielsweise eine längliche, quaderförmige Konfiguration aufweisen kann. Das Aufnehmergehäuse verfügt über eine Auflagefläche 5, mit welcher es auf die Oberfläche 16 eines zu messenden Werkstücks platziert werden kann. Im Zentrum des Aufnehmergehäuses 1 von der Auflagefläche 5 ausgehend ist eine Aussparung 7 angeordnet. In diese Aussparung ist wenigstens ein elastisches Element 6 eingefügt, auf dessen Aussenseite ein dehnungsempfindliches Element 4 befestigt ist. Die elastischen Elemente 6 sind in beliebiger Form und Dicke so ausgebildet, dass die dehnungsempfindlichen Elemente 4 darauf Platz finden und dass die Oberflächendehnungen in den gewünschten Richtungen erfasst werden können. Die Aussparung 7 ist so gestaltet, dass das elastische Element in die Aussparung passt und im eingebauten Zustand etwas über die Auflagefläche 5 hinausragt. Das dehnungsempfindliche Element 4 kann mit einer Folie 3 abgedeckt und damit geschützt sein.

Über der Aussparung 7 ist im Aufnehmergehäuse 1 ein Elektronikraum 21 ausgespart, in welchem eine Verstärkerelektronik 9 untergebracht ist. Die Signale des dehnungsempfindlichen Elements 4 werden durch eine axiale Bohrung 22 über ein Kabel 8 zur Verstärkerelektronik 9 geführt. Diese kann die Signale des dehnungsempfindlichen Elements verstärken bzw. verarbeiten, so dass die Signale über einen Stecker 10 abgegriffen werden können.

Für jeden der beiden Magnete 17, 17' ist im Aufnehmergehäuse 1 ein Hohlraum 2 vorgesehen. Die Magnete selbst sind in einem Topf 11 gelagert, der in einer Führung 12 im rechten Winkel zur Auflagefläche 5 verschiebbar gelagert ist. Mit dem Topf 11 fest verbunden ist eine Stange 15, auf der eine Schraubendruckfeder 13 gelagert ist. Am Ende der Stange 15 ist eine Verstellschraube 14 angeordnet, an der sich die Feder 13 abstützt. Das andere Ende der Feder ist auf dem Gehäuse 1 abgestützt, so dass die Anstellkraft über die Verstellschrauben 14 eingestellt werden kann. Die Druckfedern 13 wirken auch noch als Vibrationsdämpfer.

Wie aus Figur 2 ersichtlich ist, sind die beiden Magnete 17, 17' auf die magnetische, metallische Oberfläche 16 angebracht und pressen somit das Aufnehmergehäuse 1 und das dehnungsempfindliche Element 4 auf die Oberfläche. Die Anpresskraft wird dabei über die Schraubendruckfedern 13 auf das Aufnehmergehäuse übertragen. Das elastische Element 6 wird damit so stark auf die Oberfläche 16 gepresst, dass die darauf angebrachten dehnungsempfindlichen Elemente 4 kraftschlüssig, ohne Schlupf mit der Oberfläche verbunden sind. Dadurch wird jede auf der zu messenden Oberfläche auftretende Dehnung direkt auf das dehnüngsempfindliche Element 4 übertragen, welches seinerseits ein dehnungsproportionales Signal abgibt. Durch den gleich bleibenden Vorsprung des elastischen Elements 6 gegenüber der Auflagefläche 5 wird ein stets gleich bleibender Druck auf das dehnungsempfindliche Element 4 ausgeübt. Die Folie 3 schützt vor Umgebungseinflüssen, so dass das dehnungsempfindliche Element beliebig oft angepresst und verwendet werden kann.

Ersichtlicherweise kann es sich bei den dehnungsempfindlichen Elementen um Dehnungsmessstreifen handeln, die in beliebigen Winkeln, auch quer zur Montagerichtung auf den elastischen Elementen angebracht werden können. So können beispielsweise 4 Dehnungsmessstreifen als Vollbrücke auf die Oberfläche 16 gepresst werden, womit eine temperaturkompensierte und statische Messung ermöglicht wird.

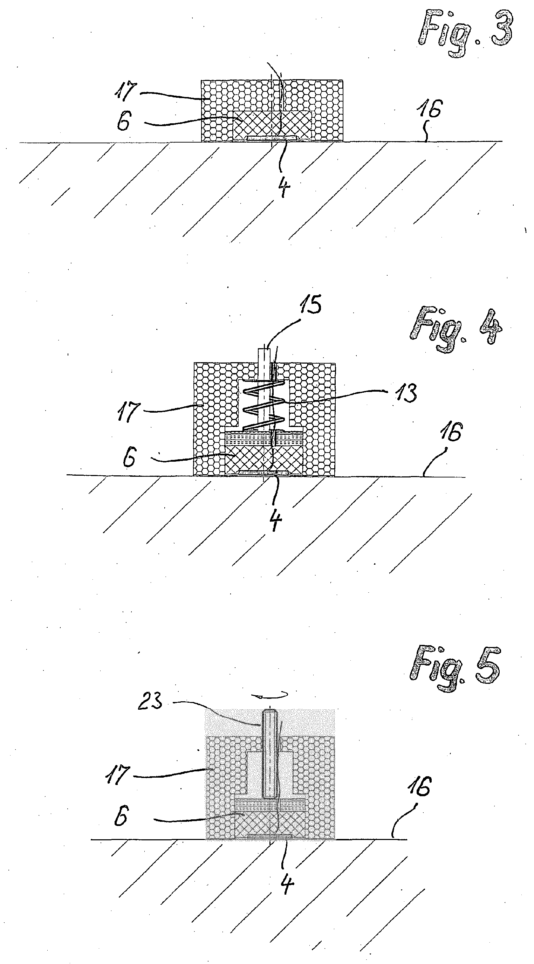

Bei der nicht erfindungsgemässen Alternative gemäss Figur 3 ist nur ein einziger Magnet 17 vorhanden, der gleichzeitig das Aufnehmergehäuse bildet. Das elastische Element 6 wird vom Magneten 17 praktisch vollständig umgeben, mit Ausnahme der Montageseite gegen die zu messende Oberfläche 16. Das dehnungsempfindliche Element 4 wird auch hier so stark gegen die Oberfläche 16 gepresst, dass Dehnungen schlupffrei auf das dehnungsempfindliche Element übertragen werden. Die Anpresskraft lässt sich bei dieser Ausführungsform nicht einstellen.

Bei der nicht erfindungsgemässen Alternative gemäss Figur 4 ist ebenfalls nur ein einziger Magnet 17 vorgesehen, der das elastische Element 6 mit dem dehnungsempfindlichen Element 4 umgibt. Das elastische Element ist jedoch mit einer Stange 15 versehen, die im Magnet 17 geführt ist. Auf der Stange ist eine Schraubendruckfeder 13 angeordnet, welche je nach Federcharakteristik eine mehr oder weniger starke Anpresskraft auf das elastische Element 6 ausübt.

Bei der nicht erfindungsgemässen Alternative gemäss Figur 5 ist der Magnet 17 etwa gleich ausgebildet wie beim Ausführungsbeispiel gemäss Figur 4. An Stelle der Stange 15 tritt jedoch ein Schraubenbolzen 23, der in eine Gewindebohrung im Magnet 17 eingeschraubt ist. Nach dem Aufsetzen des Magneten 17 auf die zu messende Oberfläche 16 kann durch Drehen des Schraubenbolzens 23 die gewünschte Anpresskraft auf das elastische Element 6 bzw. auf das dehnungsempfindliche Element 4 ausgeübt werden.

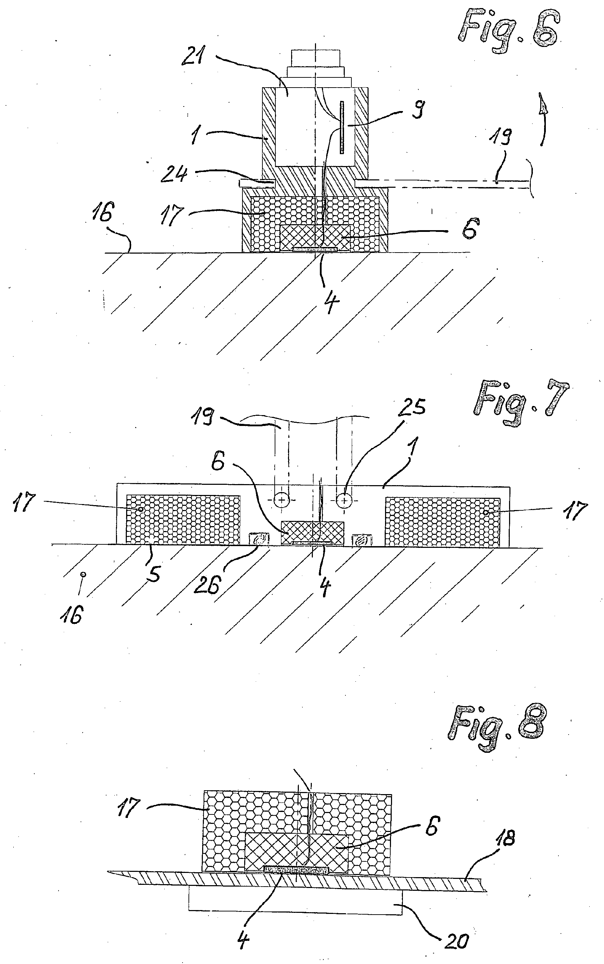

Bei der nicht erfindungsmässen Alternative gemäss Figur 6 ist das Aufnehmergehäuse ähnlich wie beim Ausführungsbeispiel gemäss den Figuren 1 und 2 mit einem Elektronikraum 21 versehen, der eine Verstärkerelektronik 9 aufnehmen kann. Das Aufnehmergehäuse besteht dabei idealerweise aus einem Material, welches die Magnetkraft des Magneten 17 verstärkt. Dieser umgibt wie bei den vorstehend beschriebenen Ausführungsbeispielen das elastische Element 6 mit dem dehnungsempfindlichen Element 4 und presst es ohne Einstellmöglichkeit gegen die zu messende Oberfläche 16.

Eine Eindrehung 24 im rotationssymmetrischen Gehäuse 1 erlaubt das Ansetzen eines passend geformten Schlüssels 19. Mit diesem kann eine Hebelkraft auf das Gehäuse 1 ausgeübt werden, so dass ein Abkippen nach oben möglich ist. Dadurch verringert sich die Magnetkraft und der Dehnungsaufnehmer kann einfach demontiert werden. Durch Drehen des Aufnehmergehäuses 1 kann die Dehnung in jeder beliebigen Richtung gemessen werden.

Das Ausführungsbeispiel gemäss Figur 7 zeigt ein relativ flaches Aufnehmergehäuse 1, das rund oder polygonal ausgebildet sein kann. Das Gehäuse kann mehrere Magnete 17 aufnehmen, die fest in das Gehäuse 1 integriert sind. Die Magnete sind in jedem Fall so angeordnet, dass das elastische Element 6 mit dem dehnungsempfindlichen Element 4 möglichst gleichmässig auf die zu messende Oberfläche 16 gepresst wird. Am Gehäuse 1 können Bohrungen 25 angeordnet sein, die das Ansetzen eines Hilfsmittels 19 zum Abheben des Gehäuses ermöglichen. Ein manuelles Abheben eines derart flachen Gehäuses ist bei entsprechender Magnetkraft praktisch nicht mehr möglich. In die Auflagefläche 5 kann in einer dafür vorgesehenen Nut ein O-Ring 26 eingelassen sein, womit gegenüber dem dehnungsempfindlichen Element 4 eine Dichtwirkung erzielt wird. Damit werden Messfehler durch eindringende Feuchtigkeit verhindert.

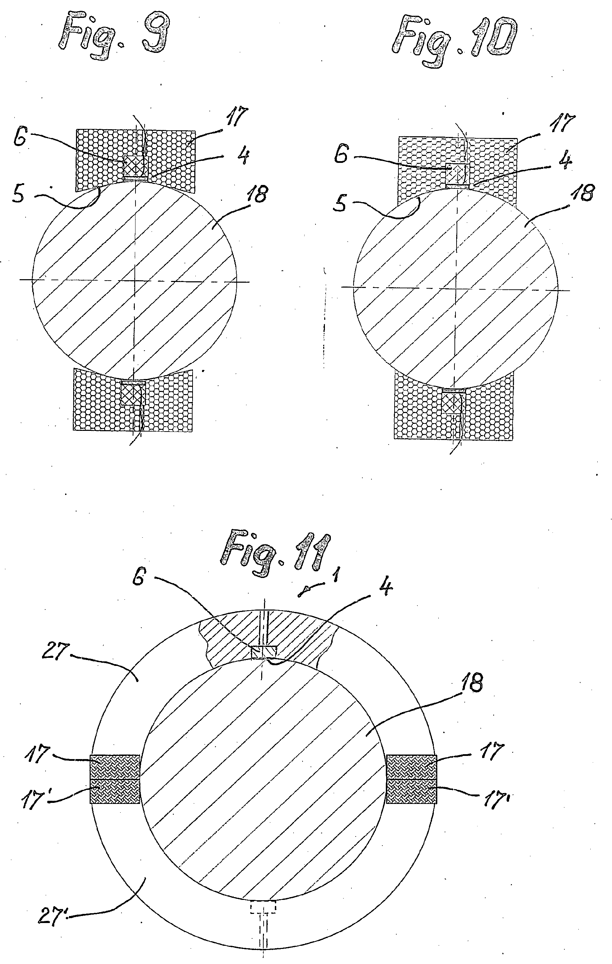

Die nicht erfindungsgemässe Messanordnung gemäss Figur 8 zeigt einen Dehnungsaufnehmer, der gleich ausgebildet ist wie derjenige gemäss Figur 3. Die Messung erfolgt jedoch auf einem flächigen Werkstück 18 aus nicht magnetischem Werkstoff, auf dem der Magnet 17 damit ersichtlicherweise nicht haften kann. Damit trotzdem eine Dehnungsmessung über das dehnungsempfindliche Element 4 möglich ist, wird auf der Rückseite des Werkstücks 18 ein Gegenmagnet und/oder eine magnetische Stahlplatte 20 angeordnet. Damit kann eine ausreichende Haftung gewährleistet werden. Die beiden nicht erfindungsgemässen Messanordnungen gemäss den Figuren 9 und 10 zeigen die Dehnungsmessung an einem zylindrischen oder gegebenenfalls sphärischen Werkstück 18. Auch hier bildet jeweils der Magnet 17 unmittelbar das Gehäuse für das elastische Element 6 mit dem dehnungsempfindlichen Element 4. Gemäss Figur 9 ist die Auflagefläche 5 durch zwei ebene Auflageflächen gebildet, die in einem Winkel von mehr als 150° zueinander geneigt sind. Diese Auflagefläche kann ersichtlicherweise auf Werkstücke mit unterschiedlich gekrümmten Oberflächen aufgesetzt werden. Auch eine rotationssymmetrische Ausbildung mit einer Auflagefläche als Trichter wäre denkbar.

Gemäss Figur 10 ist die Auflagefläche 5 exakt dem Radius des Werkstücks 18 angepasst. Zu diesem Zweck kann die Auflagefläche exakt geschliffen werden, was eine spielfreie Platzierung auf dem Werkstück ermöglicht.

Gemäss den Figuren 9 und 10 sind jeweils zwei Dehnungsaufnehmer einander diametral gegenüberliegend angeordnet. Dies ist jedoch nicht zwingend erforderlich bzw. die Dehnungsaufnehmer könnten auch in einem beliebigen Winkel zueinander auf dem Werkstück 18 aufgesetzt sein.

Die Figur 11 zeigt eine weitere Messanordnung zum Messen eines hier beispielsweise zylindrischen Werkstücks 18. Das Aufnehmergehäuse 1 ist als Umfassungsmittel bestehend aus zwei Jochbogen oder Ringhälften 27 und 27' ausgebildet, mit dem das Werkstück 18 wie eine Manschette vollständig umfasst werden kann. In jeder der beiden Ringhälften kann ein elastisches Element 6 mit einem dehnungsempfindlichen Element 4 angeordnet sein. An jedem Ende der Ringhälften ist je ein Magnet 17 bzw. 17' angeordnet, sodass die beiden Ringhälften magnetisch aneinander haften. Die Dimensionierung der Bauteile ist dabei so gewählt, dass am dehnungsempfindlichen Element 4 eine gleichmässige Anpresskraft aufgebracht wird.

Ersichtlicherweise muss das Umfassungsmittel nicht zwingend ringförmig ausgebildet sein. Je nach dem zu messendem Werkstück wären ganz unterschiedliche Konfigurationen denkbar. Ausserdem muss das Umfassungsmittel nicht zwingend aus zwei separaten Teilen bestehen. Denkbar wäre auch eine scharnierartige Verbindung auf einer Seite und eine magnetische Verbindung auf der gegenüberliegenden Seite. Auch entsprechende Vorrichtungen zum Einstellen der Anpresskraft wie z.B. einstellbare Federmittel oder dergleichen wären denkbar. Der Vorteil eines derart ausgebildeten Dehnungsaufnehmers besteht darin, dass er sehr rasch auch an nicht magnetischen Werkstücken montierbar und demontierbar ist.

## Patentansprüche

1. Dehnungsaufnehmer zum elektrischen Messen negativer und positiver Oberflächendehnungen mit einem Aufnehmergehäuse (1) und mit wenigstens einem, elektrische Signale erzeugenden, dehnungsempfindlichen Element (4), das auf der Stirnseite eines elastischen Elements (6) angeordnet ist, wobei der Dehnungsaufnehmer Anpressmittel umfasst, mit denen das dehnungsempfindliche Element über das Aufnehmergehäuse derart kraftschlüssig gegen die zu messende Oberfläche (16) pressbar ist, dass die Dehnung an dieser Oberfläche durch Reibung ohne Schlupf und ohne Signalverluste auf das dehnungsempfindliche Element übertragbar ist, wobei die Anpressmittel magnetische Mittel sind und wobei die Magnetkraft derart ausgebildet ist, dass eine reibschlüssige Verbindung zwischen dem dehnungsempflindlichen Element (4) und der zu messenden Oberfläche ohne Klebung gewährleistet ist, **dadurch gekennzeichnet, dass** das elastische Element (6) in das Aufnehmergehäuse (1) eingelassen ist und gegenüber einer Auflagefläche (5) des Aufnehmergehäuse (1) definiert vorsteht und dass die Anpressmittel zwei Permanentmagnete (17, 17') sind, wobei das dehnungsempfindliche Element (14) zwischen den beiden Permanentmagneten (17, 17') angeordnet ist.

2. Dehnungsaufnehmer nach Anspruch 1, **dadurch gekennzeichnet, dass** die Anpresskraft der Permanentmagnete (17, 17') über Druckfedern (13) auf das Aufnehmergehäuse (1) übertragbar ist.

3. Dehnungsaufnehmer nach Anspruch 2, **dadurch gekennzeichnet, dass** die Vorspannkraft der Druckfedern mittels Verstellschrauben (14) einstellbar ist.

4. Dehnungsaufnehmer nach einem der Ansprüche 1 bis 3, **dadurch gekennzeichnet, dass** die Permanentmagnete in einer Führung (12) im Aufnehmergehäuse geführt sind.

5. Dehnungsaufnehmer nach einem der Ansprüche 1 bis 4, **dadurch gekennzeichnet, dass** das dehnungsempfindliche Element (4) mittels einer dünnen Folie (3) geschützt ist.

6. Dehnungsaufnehmer nach einem der Ansprüche 1 bis 5, **dadurch gekennzeichnet, dass** das dehnungsempfindliche Element ein Dehnungsmessstreifen ist, der in beliebigem Winkel auf dem elastischen Element (6) angeordnet ist.

7. Dehnungsaufnehmer nach einem der Ansprüche 1 bis 6, **dadurch gekennzeichnet, dass** das dehnungsempfindliche Element (4) eine piezokeramische Scheibe oder eine Piezo-Folie ist.

8. Dehnungsaufnehmer nach Anspruch 6, **dadurch gekennzeichnet, dass** es vier Dehnungsmessstreifen aufweist, die als Vollbrücken verschaltet sind.

9. Dehnungsaufnehmer nach einem der Ansprüche 1 bis 8, **dadurch gekennzeichnet, dass** im Aufnehmergehäuse eine Verstärkerelektronik angeordnet ist und dass die Signalkabel durch Bohrungen vom dehnungsempfindlichen Element zur Verstärkerelektronik geführt sind.

10. Dehnungsaufnehmer nach einem der Ansprüche 1 bis 9, **dadurch gekennzeichnet, dass** er mit Hilfsmitteln (19) zum Abheben von einer zu messenden Oberfläche versehen ist, welche fest oder lösbar am Aufnehmergehäuse (1) angeordnet sind.

11. Dehnungsaufnehmer nach Anspruch 1 , **dadurch gekennzeichnet, dass** das Aufnehmergehäuse (1) zum wenigstens teilweisen Umfassen eines Werkstücks als schliessbares Umfassungsmittel (27) insbesondere als geteilter Flansch ausgebildet ist und dass die Schliesskraft des Umfassungsmittels (27) durch die Permanentmagnete auf ein benachbartes Ende des Umfassungsmittels aufbringbar ist.

12. Dehnungsaufnehmer nach einem der Ansprüche 1 bis 10, **dadurch gekennzeichnet dass**, das Aufnehmergehäuse (1) eine längliche, quaderförmige Konfiguration aufweist.

## Claims

1. Extension sensor for electrically measuring negative and positive surface extensions, with a sensor housing (1) and with at least one extension-sensitive element (4), which generates electrical signals and is arranged on the end face of an elastic element (6), the extension sensor comprising pressing means with which the extension-sensitive element can be pressed via the sensor housing in a frictional engaging manner against the surface (16) to be measured, in such a way that the extension at the surface can be transmitted to the extension-sensitive element by non-slip friction, without any signal losses, the pressing means being magnetic means and the magnetic force being formed in such a way that a frictional connection between the extension-sensitive element (4) and the surface to be measured is ensured without adhesive bonding, **characterized in that** the elastic element (6) is embedded in the sensor housing (1) and protrudes in a defined manner from a supporting surface (5) of the sensor housing (1) and **in that** the pressing means are two permanent magnets (17, 17'), the extension-sensitive element (14) being arranged between the two permanent magnets (17, 17').

2. Extension sensor according to Claim 1, **characterized in that** the pressing force of the permanent magnets (17, 17') can be transmitted to the sensor housing (1) via compression springs (13).

3. Extension sensor according to Claim 2, **characterized in that** the prestressing force of the compression springs can be set by means of adjusting screws (14).

4. Extension sensor according to one of Claims 1 to 3, **characterized in that** the permanent magnets are guided in a guide (12) in the sensor housing.

5. Extension sensor according to one of Claims 1 to 4, **characterized in that** the extension-sensitive element (4) is protected by means of a thin film (3).

6. Extension sensor according to one of Claims 1 to 5, **characterized in that** the extension-sensitive element is an extension measuring strip, which is arranged at any desired angle on the elastic element (6).

7. Extension sensor according to one of Claims 1 to 6, **characterized in that** the extension-sensitive element (4) is a piezoceramic wafer or a piezo film.

8. Extension sensor according to Claim 6, **characterized in that** it has four extension measuring strips, which are connected as full bridges.

9. Extension sensor according to one of Claims 1 to 8, **characterized in that** amplifier electronics are arranged in the sensor housing and **in that** the signal cables are led through bores from the extension-sensitive element to the amplifier electronics.

10. Extension sensor according to one of Claims 1 to 9, **characterized in that** it is provided with aids (19) for lifting off from a surface to be measured, which are arranged fixedly or releasably on the sensor housing (1).

11. Extension sensor according to Claim 1, **characterized in that** the sensor housing (1) is designed for at least partially enclosing a workpiece as closable enclosing means (27), in particular as a divided flange, and **in that** the closing force of the enclosing means (27) can be applied to an adjacent end of the enclosing means through the permanent magnets.

12. Extension sensor according to one of Claims 1 to 10, **characterized in that** the sensor housing (1) has an elongated, cuboidal configuration.

## Revendications

1. Capteur d'allongement destiné à mesurer électriquement des dilatations négatives et positives de surfaces, comportant un boîtier de capteur (1) et comportant au moins un élément (4) sensible à l'allongement générant des signaux électriques qui est disposé sur la face avant d'un élément élastique (6), dans lequel le capteur d'allongement comprend des moyens d'application de pression à l'aide desquels l'élément sensible à l'allongement peut être comprimé par l'intermédiaire du boîtier de capteur contre la surface à mesurer (16) par une liaison de transmission de force de manière à ce que l'allongement puisse être transmis à l'élément sensible à l'allongement sur ladite surface par frottement sans glissement et sans perte du signal, dans lequel les moyens d'application de pression sont des moyens magnétiques et dans lequel la force magnétique est générée de manière à ce qu'une liaison par frottement entre l'élément sensible à l'allongement (4) et la surface à mesurer soit assurée sans adhérence, **caractérisé en ce que** l'élément élastique (6) est introduit dans le boîtier de capteur (1) et dépasse de manière définie d'une surface de support (5) du boîtier de capteur (1) et **en ce que** les moyens d'application de pression sont deux aimants permanents (17, 17'), dans lequel l'élément sensible à la pression (14) est disposé entre les deux aimants permanents (17, 17').

2. Capteur d'allongement selon la revendication 1, **caractérisé en ce que** la force de pression des aimants permanents (17, 17') peut être transmise par l'intermédiaire de ressorts de compression (13) au boîtier de capteur (1).

3. Capteur d'allongement selon la revendication 2, **caractérisé en ce que** la force de précontrainte des ressorts de compression peut être réglée au moyen de vis de réglage (14).

4. Capteur d'allongement selon l'une quelconque des revendications 1 à 3, **caractérisé en ce que** les aimants permanents sont introduits dans un guide (12) ménagé dans le boîtier de capteur.

5. Capteur d'allongement selon l'une quelconque des revendications 1 à 4, **caractérisé en ce que** l'élément sensible à l'allongement (4) est protégé au moyen d'une feuille mince (3).

6. Capteur d'allongement selon l'une quelconque des revendications 1 à 5, **caractérisé en ce que** l'élément sensible à l'allongement est une jauge extensométrique qui est disposée selon un angle quelconque sur l'élément élastique (6).

7. Capteur d'allongement selon l'une quelconque des revendications 1 à 6, **caractérisé en ce que** l'élément sensible à la pression (4) est un disque piézocéramique ou une feuille piézoélectrique.

8. Capteur d'allongement selon la revendication 6, **caractérisé en ce qu'**il comprend quatre jauges extensométriques qui sont connectées en pont complet.

9. Capteur d'allongement selon l'une quelconque des revendications 1 à 8, **caractérisé en ce qu'**une électronique d'amplification est disposée dans le boîtier de capteur et **en ce que** le câble de signaux est guidé à travers des traversées de l'élément sensible à l'allongement vers l'électronique d'amplification.

10. Capteur d'allongement selon l'une quelconque des revendications 1 à 9, **caractérisé en ce qu'**il est muni de moyens auxiliaires (19) destinés à soulever une surface à mesurer qui est disposée de manière fixe ou amovible sur le boîtier de capteur (1).

11. Capteur d'allongement selon la revendication 1, **caractérisé en ce que** le boîtier de capteur (1) est conçu de manière à comprendre au moins partiellement une pièce en tant que moyen formant enceinte pouvant être fermé (27), notamment sous la forme d'une bride fendue et **en ce que** la force de fermeture du moyen formant enceinte (27) peut être appliquée par les aimants permanents sur une extrémité adjacente du moyen formant enceinte.

12. Capteur d'allongement selon l'une quelconque des revendications 1 à 10, **caractérisé en ce que** le boîtier de capteur (1) présente une configuration parallélépipédique allongée.
